# EUROPÄISCHE PATENTSCHRIFT

(11) **EP 2 652 706 B1**
(45) Veröffentlichungstag und Bekanntmachung des Hinweises auf die Patenterteilung: **11.07.2018**
(21) Anmeldenummer: 11802015.5
(22) Anmeldetag: 06.12.2011
(51) Int. Cl.: G06T 7/20, B62D 15/02, G06T 7/269

(54) **VERFAHREN UND SYSTEM ZUR BESTIMMUNG EINER EIGENBEWEGUNG EINES FAHRZEUGS**
METHOD AND SYSTEM FOR DETERMINING A SELF-MOVEMENT OF A VEHICLE
PROCÉDÉ ET SYSTÈME DE DÉTERMINATION D'UN MOUVEMENT PROPRE À UN VÉHICULE

(30) Priorität: 15.12.2010 DE 102010063133
(43) Veröffentlichungstag der Anmeldung: 23.10.2013
(73) Patentinhaber: Robert Bosch GmbH, 70442 Stuttgart (DE)
(72) Erfinder: HEGER, Thomas, 71229 Leonberg (DE); SIMON, Stephan, 31079 Sibbesse (DE); HELMLE, Michael, 73732 Esslingen (DE)
(86) Internationale Anmeldenummer: PCT/EP2011/071961
(87) Internationale Veröffentlichungsnummer: WO 2012/080044

(56) Entgegenhaltungen:
- DE-A1-102005 000 651
- DE-A1-102006 027 123
- US-A1- 2009 243 889
- GIACHETTI A ET AL: "The Recovery of Optical Flow for Intelligent Cruise Control", 19941024; 19941024 - 19941026, 24. Oktober 1994 (1994-10-24), Seiten 91-96, XP010258311,
- ELISA MARTINEZ ET AL: "Driving assistance system based on the detection of head-on collisions", INTELLIGENT VEHICLES SYMPOSIUM, 2008 IEEE, IEEE, PISCATAWAY, NJ, USA, 4. Juni 2008 (2008-06-04), Seiten 913-918, XP031318920, ISBN: 978-1-4244-2568-6

## Beschreibung

### Stand der Technik

Die Erfindung betrifft Verfahren zur Bestimmung einer Eigenbewegung eines Fahrzeugs, die in Fahrerassistenzsystemen durchgeführt werden, insbesondere in Parkassistenzsystemen.

Fahrerassistenzsysteme dienen der Unterstützung des Fahrers in bestimmten Fahrsituationen. Ein Fahrerassistenzsystem kann etwa ABS (Antiblockiersystem), ESP (Elektronisches Stabilitätsprogramm), einen Abstandsregeltempomaten ("Adaptive Cruise Control", ACC), und/oder einen Parkassistenten zum assistierten Ein- bzw. Ausparken umfassen.

Für zumindest einige der Fahrerassistenz-Subsysteme ist auch eine Bestimmung einer Fahrzeugeigenbewegung erforderlich; bspw. in einem System zur Kollisionswarnung, das auf einer Vorhersage basiert, ob es bei einer Fortsetzung der momentanen Fahrzeugbewegung zu einer Kollision kommt oder nicht. Parkassistenten benötigen Informationen zur momentanen tatsächlichen Fahrzeugposition in Bezug auf z.B. parklückenbegrenzende Objekte für eine Berechnung, Überwachung und ggf. Anpassung einer Trajektorie. Parkhausassistenten, die i.d.R sowohl eine Kollisionswarnung als auch eine Trajektorienberechnung umfassen, benötigen daher ebenfalls Angaben zur Eigenbewegung, aus der z.B. auch eine momentane Position des Fahrzeugs berechnet werden kann.

Es ist allgemein bekannt, eine Fahrzeugeigenbewegung basierend auf Sensoren zu bestimmen, welche einen Fahrzeugzustand umgebungsunabhängig messen. Beispielsweise liefern Rad-, Motor- oder Bremssystemsensoren Informationen zu einer Fahrzeuggeschwindigkeit, Lenkungssensoren liefern Informationen zu einem momentanen Lenkwinkel. Darüberhinaus ist es auch bekannt eine momentane Fahrzeugposition beispielsweise basierend auf ein GPS ("Global Positioning System") zu erheben. Daten zu einer Kurvenfahrt des Fahrzeugs können etwa basierend auf einem Gyroskop erhoben werden.

In der DE 10 2008 036 009 A1 wird ein Verfahren zum Schutz eines Fahrzeugs vor einer Kollision in einem Park- und Rangierbereich beschrieben. Hierzu erfassen Ultraschallsensoren Informationen zum Umfeld des Fahrzeugs. Aus weiteren Daten zur Fahrzeuggeschwindigkeit und zum momentanen Lenkwinkel werden die in einem fahrzeugfesten Koordinatensystem gemessenen Ultraschall-Sensorinformationen in ein raumfestes Koordinatensystem transformiert, woraus sich eine raumfeste Umfeldkarte ergibt. Aus der Umfeldkarte und der Fahrzeugeigenbewegung wird dann eine Kollisionswahrscheinlichkeit des Fahrzeugs mit in der Umgebung des Fahrzeugs befindlichen Objekten berechnet.

Aus der DE 60 2004 012 962 T2 ist ein Verfahren zur Echtzeit-Hinderniserkennung aus einem sich relativ zu einer Straße bewegenden Fahrzeug bekannt. Basierend auf Bildern einer Videokamera werden Bewegungsflüsse von Punkten berechnet, deren projizierte Bewegung von der Kamera erfasst wird. Punkte, die zu potentiellen Hindernissen gehören, die sich nicht mit der Straßenebene gemeinsam bewegen, werden über ein optisches Flussverfahren bestimmt. Dieses kamerabasierte Hinderniserkennungsverfahren kann mit weiteren Systemen kombiniert werden, wie beispielsweise einem Ultraschall-Hinderniserkennungssystem, um zu einer höheren Genauigkeit und/oder einem robusteren Verfahren zu kommen.

Die oben beschriebenen Verfahren zum Kollisionsschutz bzw. zur Hinderniserkennung sind entweder nicht sehr genau oder aber komplex. Soll die Komplexität etwa eines Einparkassistenten jedoch aus Kostengründen beschränkt bleiben, dann kann dies nur so erreicht werden, dass beispielsweise bei der Berechnung einer Einparktrajektorie oder zur Kollisionswarnung vergleichsweise große Sicherheitsabstände vorgesehen werden. Dies begrenzt jedoch den Nutzwert entsprechender Systeme beim assistierten Parken oder bei der Navigation in einem unübersichtlichen Umfeld wie etwa in einem Parkhaus.

Die Schrift DE 10 2006 027 123 A1 beschreibt ein Verfahren für die Erfassung eines Verkehrsraums mit einem einen monokularen Bildsensor umfassenden Fahrerassistenzsystem, wobei von dem Bildsensor zeitlich aufeinander folgende Bilder des

Verkehrsraums erzeugt werden. In den einzelnen Bildern wird der optische Fluss ermittelt. Der optische Fluss wird auf Diskontinuitäten untersucht, wobei aufgefundene Diskontinuitäten des optischen Flusses Objekten des Verkehrsraums zugeordnet werden.. Das Verfahren ermöglicht die Detektion statischer und bewegter Hindernisse aus dem Bildstrom und die Segmentierung des Bildes in Straßen, interessierende statische und bewegte Objekte und sonstige Merkmale. Der segmentierte Straßenverlauf erlaubt, basierend auf einer Flussanalyse, eine Bestimmung der Eigenbewegung des Fahrzeugs. In dem Fahrzeug vorhandene andere Sensoren des Fahrerassistenzsystems können in ihrer Vermessungsgenauigkeit durch die bestimmte Eigenbewegung unterstützt werden.

### Offenbarung der Erfindung

Erfindungsgemäß wird ein Verfahren nach Anspruch 1 zur Bestimmung einer Eigenbewegung eines Fahrzeugs vorgeschlagen, welches die folgenden Schritte umfasst: Aufnehmen einer Sequenz zeitlich aufeinander folgenden Bilder einer Fahrzeugumgebung durch eine Fahrzeugkamera; Bestimmen mindestens eines Bewegungsflusses bezüglich eines Objekts in der Fahrzeugumgebung; und Bestimmen der Eigenbewegung des Fahrzeugs basierend auf den mindestens einen Bewegungsfluss.

Bei der Fahrzeugkamera kann es sich beispielsweise um eine Rückfahrkamera handeln, die Bilder einer rückwärtigen Fahrzeugumgebung aufnimmt, etwa bei einer Rückwärtsfahrt beim Ein- oder Ausparken.

Bei dem Objekt, dessen Bewegungsfluss bestimmt wird, kann es sich um ein statisches Objekt in der Fahrzeugumgebung handeln, etwa um ein anderes Fahrzeug, eine Parkraumbegrenzung, etc. Zur Bestimmung eines Bewegungsflusses wird letztlich eine Oberfläche einer Struktur benötigt, somit kann es sich bei dem Objekt ebenso auch um eine Oberfläche einer Strasse oder Fahrbahn, eines Parkraums oder eine sonstige Bodenoberfläche handeln, die im Blickfeld der Kamera liegt, soweit hier ein Bewegungsfluss messbar ist.

Zur Bestimmung der Eigenbewegung des Fahrzeugs können weiterhin Daten von Fahrzeugsensoren herangezogen werden, die eine momentane Geschwindigkeit und/oder einen momentanen Lenkwinkel messen. Zusätzlich oder alternativ können zur Bestimmung der Eigenbewegung des Fahrzeugs Daten von Ultraschallsensoren des Fahrzeugs herangezogen werden, die Abstände zu Objekten in der Fahrzeugumgebung messen. Weitere Daten zur momentanen Position bzw. Bewegung des Fahrzeugs können beispielsweise von GPS-Systemen, Gyroskopen oder sonstigen positions- bzw. bewegungssensitiven Detektoren herangezogen werden.

Bei bestimmten Ausführungsformen des erfindungsgemäßen Verfahrens wird aus dem mindestens einen bestimmten Bewegungsfluss (der eine Bewegung des Fahrzeugs relativ zu einem Hindernis betreffen kann, beispielsweise zu einem parkraumbegrenzenden Objekt) eine "Time-To-Collision" ("Time-To-Contact", "Time-To-Crash", TTC) berechnet, die in die Bestimmung der Eigenbewegung eingeht. Eine TTC kann im Zusammenhang mit einer optischen Flussberechnung direkter und einfacher zu berechnen sein als eine Bewegung oder Position des Fahrzeugs, so dass sich die Eigenbewegungsbestimmung des Fahrzeugs entsprechend vereinfachen kann. Die TTC kann zusätzlich oder alternativ auch für eine Bestimmung einer Kollisionswarnung verwendet werden.

Ausführungsformen des erfindungsgemäßen Verfahrens können weiterhin beinhalten, dass basierend auf dem mindestens einen bestimmten Bewegungsfluss und mindestens einem weiteren bestimmten Bewegungsfluss und/oder weiteren Sensordaten, wie etwa Ultraschalldaten, Radzustands- bzw. Lenkungsdaten, eine Eigenbewegung eines Objekts in der Fahrzeugumgebung detektiert wird. Dies ermöglicht die Erkennung nicht-statischer Objekte, beispielsweise parklückenquerender Fußgänger, sich bewegender parklückenbegrenzender Fahrzeuge, etc. Hierdurch kann sich entsprechend die Zuverlässigkeit von Kollisionswarnsystemen verbessern.

Erfindungsgemäß wird weiterhin ein Verfahren in einem Parkassistenzsystem eines Fahrzeugs vorgeschlagen, welches zur kontinuierlichen Berechnung, Überprüfung und/oder Anpassung einer Parktrajektorie dient. Hierbei wird eine Eigenbewegung des Fahrzeugs so bestimmt, wie dies vorstehend skizziert worden ist.

Nochmals weiterhin wird ein Verfahren zur Kollisionswarnung in einem Fahrerassistenzsystem nach Anspruch 6 eines Fahrzeugs vorgeschlagen, bei dem eine Eigenbewegung eines Fahrzeugs bestimmt wird, wie dies vorstehend skizziert wurde.

Erfindungsgemäß wird weiterhin ein Computerprogramm nach Anspruch 7 vorgeschlagen, gemäß dem eines der hierin beschriebenen Verfahren durchgeführt wird, wenn das Computerprogramm auf einer programmierbaren Computereinrichtung ausgeführt wird. Bei der Computereinrichtung kann es sich beispielsweise um ein Modul zur Implementierung eines Fahrerassistenzsystems, oder eines Subsystems hiervon, in einem Fahrzeug handeln. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-ROM, DVD oder einem USB-Stick. Zusätzlich oder alternativ kann das Computerprogramm auf einer Computereinrichtung wie etwa einem Server zum Herunterladen bereitgestellt werden, z.B. über ein Datennetzwerk wie etwa das Internet oder eine Kommunikationsverbindung wie etwa eine Telefonleitung oder eine drahtlose Verbindung.

Erfindungsgemäß wird weiterhin ein Fahrerassistenzsystem nach Anspruch 8 vorgeschlagen, das zur Bestimmung einer Eigenbewegung eines Fahrzeugs ausgebildet ist. Dieses System umfasst die folgenden Komponenten: Eine Fahrzeugkamera zum Aufnehmen einer Sequenz zeitlich aufeinander folgender Bilder einer Fahrzeugumgebung; eine Komponente zum Bestimmen, basierend auf der Bildsequenz, mindestens eines Bewegungsflusses bezüglich eines Objekts in der Fahrzeugumgebung; und eine Komponente zum Bestimmen der Eigenbewegung des Fahrzeugs basierend auf dem mindestens einen optischen Fluss.

### Vorteile der Erfindung

Die Erfindung basiert u.a. auf der Idee, eine Berechnung der Eigenbewegung eines Fahrzeugs auf einfache Weise zu verbessern, indem Daten einer Fahrzeugkamera für die Bestimmung der Eigenbewegung herangezogen werden, beispielsweise die Daten einer Rückfahrkamera. Bei den bisher bekannten Systemen werden Bilder einer Fahrzeugkamera nur zur Hinderniserkennung eingesetzt, nicht zur Bestimmung der Fahrzeugeigenbewegung; diese wird vielmehr basierend auf umgebungsunabhängigen Sensoren wie Radzustands- und Lenkwinkelsensoren bestimmt, oder über GPS, Gyroskope und dgl.

Die Erfindung führt zu einer Erhöhung der Genauigkeit von Parkassistenten, Kollisionswarnsystemen, etc., ohne deren Komplexität übermäßig zu erhöhen. Eine verbesserte Genauigkeit bei der Bestimmung der Eigenbewegung ist hilfreich z.B. bei einer Berechnung, Überwachung und Anpassung einer Ein-/Ausparktrajektorie, zum Erzielen eines "sanften" Einparkens bei automatischer Führung, für eine Kollisionswarnung, etc. Zum Teil werden diese Vorteile dadurch erzielt, dass aufgrund der verbesserten Genauigkeit bei der Eigenbewegungsbestimmung geringere Sicherheitsabstände zu Objekten bzw. potentiellen Hindernissen entlang eines Fahrschlauchs oder einer Trajektorie beim Ein- bzw. Ausparken, Navigieren in einem beengten Umfeld wie einem Parkhaus, etc. erforderlich sind.

Die genauere Bestimmung der Fahrzeugeigenbewegung ermöglicht eine verbesserte Führung des Fahrzeugs entlang einer vorausberechneten Trajektorie z.B. beim Einparken. So kann beispielsweise ein Gieren des Fahrzeugs in lateraler Richtung früher bzw. besser erkannt werden und es kann z.B. ein Gegenlenken veranlasst werden.

Die Erfindung bietet auch die Möglichkeit, zusätzlich oder alternativ Verfahren zur Abstandsschätzung zu Objekten in der Fahrzeugumgebung zu verbessern, die etwa auf einem Ultraschallsystem basieren. Die Kombination mit dem Bestimmen von Bewegungsflüssen (optischen Flüssen) in einer Kamerabildsequenz ermöglicht genauere bzw. robustere Abstandsschätzungen. Dies gilt beispielsweise bei der gleichzeitigen Verwendung einer Rückfahrkamera und einer Ultraschallsensorik für einen Parkassistenten. Die Erfindung kann auch für eine Relativgeschwindigkeitsbestimmung genutzt werden, etwa im Rahmen einer Pre-Crash-Anwendung. Hier kann beispielsweise durch Kombination der aus Ultraschall- und Videodaten bestimmten Abstands- und/oder Relativgeschwindigkeitsdaten zuverlässiger und genauer eine drohende Kollision vorausgesehen werden.

Bei bereits vorhandener Fahrzeugkamera sind zur Implementierung der Erfindung prinzipiell keine zusätzlichen Hardwarekomponenten erforderlich. Werden Bewegungsflüsse und/oder optische Flussberechnungsverfahren bei einer existierenden Implementierung bereits zur Hinderniserkennung verwendet, so können entsprechende Berechnungsmodule für eine Eigenbewegungsberechnung wieder verwendet werden, was die Implementierungskosten verringert.

### Kurze Beschreibung der Figuren

Weitere Aspekte und Vorteile der Erfindung werden nunmehr anhand der beigefügten Figuren eingehender beschrieben. Hierbei zeigt:
- Fig. 1: ein mit einem erfindungsgemäßen Fahrerassistenzsystem ausgerüstetes Fahrzeug in einer beispielhaften Einparksituation;
- Fig. 2: eine schematische Darstellung funktionaler Komponenten des Fahrerassistenzsystems aus Fig. 1; und
- Fig. 3: in Form eines Flussdiagramms eine Arbeitsweise des Fahrerassistenzsystems aus Fig. 2.

### Ausführungsformen der Erfindung

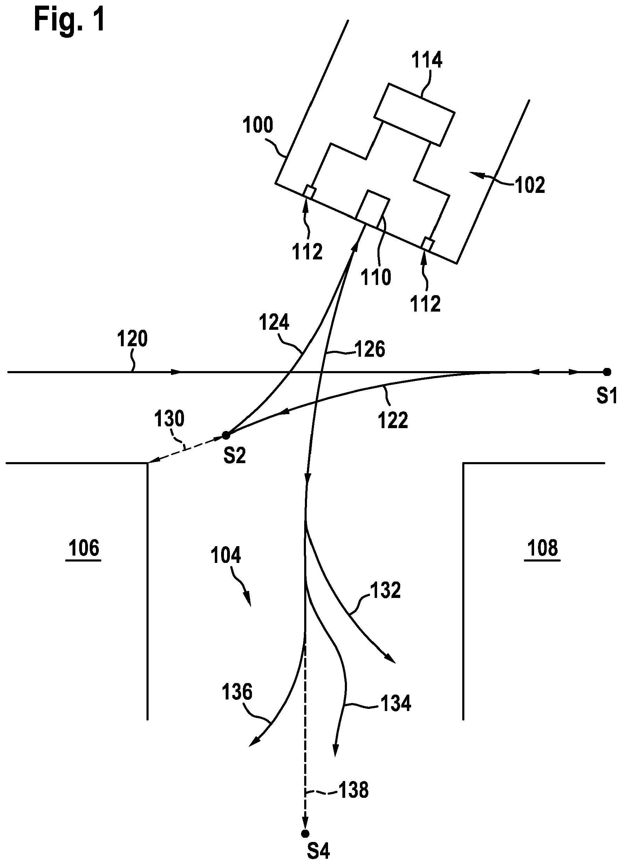

Fig. 1 illustriert in schematischer Form ein Fahrzeug 100 mit einem erfindungsgemäß ausgerüsteten Fahrerassistenzsystem 102 in einer beispielhaften Einparksituation, bei der das Fahrzeug 100 rückwärts in eine Parklücke 104 zwischen parklückenbegrenzenden Objekten 106 und 108 einzuparken ist, bei denen es sich bspw. um parkende Fahrzeuge handeln kann. Das Fahrerassistenzsystem 102 verfügt über eine als Rückfahrkamera implementierte Kamera 110 sowie einen Satz Ultraschallsensoren 112. Alle Sensoren 110, 112 sind über ein (nicht weiter gezeigtes) Fahrzeugnetzwerk mit einer zentralen Verarbeitungskomponente 114 verbunden, die als ECU ("Electronic Control Unit") implementiert ist.

Das Fahrzeug 100 bewegt sich zunächst entlang des Pfades 120 an der Parklücke 104 vorbei, wobei diese durch weitere (nicht gezeigte) Sensoren des Fahrerassistenzsystems 102 vermessen wird. Der Fahrer beschließt einzuparken, woraufhin das Fahrzeug am Stopppunkt S1 stoppt. Von diesem Punkt an übernimmt ein Einparkassistent (ein Subsystem des Fahrerassistenzsystems 102) teil- oder vollautomatisch das weitere Einparken. Das Fahrzeug 100 wird entlang der vom Einparkassistenten berechneten Trajektorie 122 rückwärts bis zum Stopppunkt S2 geführt, sodann entlang einer berechneten Trajektorie 124 nach vorne gezogen bis zu einem weiteren (nicht bezeichneten) Stopppunkt und dann rückwärts über die Trajektorie 126 in die Parklücke 104 hineingeführt.

Ungenauigkeiten bei der Erfassung der Abmessungen von Hindernissen, der Bestimmung der Eigenbewegung sowie der momentanen Position eines Fahrzeugs erfordern bei einem herkömmlichen Parkassistenten eine vergleichsweise große Toleranz, d.h. es müssen bei der Berechnung von Trajektorien wie den in Fig. 1 skizzierten vergleichsweise große Sicherheitsabstände zu Hindernissen wie den Objekten 106, 108 eingehalten werden, um gefährliche Annäherungen sicher vermeiden zu können.

Als Beispiel ist in Fig. 1 ein Sicherheitsabstand 130 zwischen dem Stopppunkt S2 und dem Objekt 106 eingezeichnet, der bei herkömmlichen Systemen beispielsweise in der Größenordnung von 10 Zentimetern (cm) oder mehr, bspw. bei 20 cm liegt, obwohl ein kleinerer Sicherheitsabstand von unter 10 cm, bspw. 5 cm oder gar nur 1 - 2 cm wünschenswert wäre, um etwa enge Parklücken nutzen zu können, trotz beengtem Manövrierraum in eine Parklücke einparken zu können, etc.

Ungenauigkeiten bei der Bestimmung der Eigenbewegung und/oder Momentanposition eines Fahrzeugs führen auch dazu, dass es bei der Führung eines Fahrzeugs entlang vorausberechneter Trajektorien zu Abweichungen kommt. Bei den dann ggf. erforderlichen Korrekturen müssen wiederum die genannten Ungenauigkeiten berücksichtigt werden. Als Beispiel ist in Fig. 1 für die Trajektorie 126 als gestrichelte Linie 138 der ideale Verlauf der tatsächlichen Fahrzeugbewegung bis zum Erreichen des endgültigen Stopppunktes S4 angedeutet. Mit den Bezugsziffern 132, 134 und 136 sind Beispiele für verschiedene reale Bewegungsabläufe gezeigt, die mehr oder weniger stark von der idealen Trajektorie 126 / 138 abweichen. Zumindest bei den Trajektorien 132 und 136 muss rechtzeitig ein Gegensteuern erfolgen, um eine Kollision mit den Objekten 106 bzw. 108 zu vermeiden. Aus Gründen der Übersichtlichkeit ist hier nur die Trajektorie 126 diskutiert, diese Ausführungen gelten jedoch sinngemäß ebenso für die Trajektorien 122 und 124.

Vorteilhafterweise werden die Ungenauigkeiten bei der Bestimmung der Eigenbewegung bzw. Momentanposition des Fahrzeugs minimiert, um Verläufe entlang von Trajektorien wie der durch die Pfeile 132 und 136 angedeuteten frühzeitig abzufangen. Bei dem hier beschriebenen Ausführungsbeispiel der Erfindung wird eine genaue Bestimmung der Eigenbewegung dadurch erreicht, dass Daten der vorhandenen Rückfahrkamera 110 mit weiteren Daten der vorhandenen Ultraschallsensoren 112 sowie Daten von weiteren (ebenfalls aus anderen Gründen bereits vorhandenen) Sensoren zur Messung der Bewegung des Fahrzeugs 100 kombiniert werden. Auf diese Weise kann ohne zusätzliche Hardwarekomponenten eine erhöhte Genauigkeit bei der Überprüfung und Anpassung der tatsächlichen Fahrzeugbewegung an die Trajektorie 126 / 138 erreicht werden, wobei die maximalen Abweichungen so gering sind, wie es etwa durch die Trajektorie 134 beispielhaft angedeutet wird.

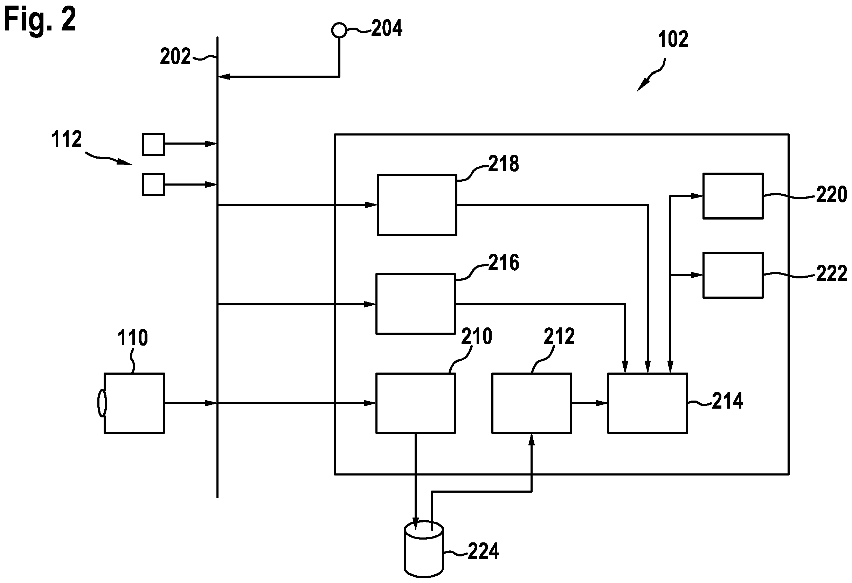

Fig. 2 illustriert schematisch funktionale Komponenten des Fahrerassistenzsystems 102, deren Zusammenwirken eine erfindungsgemäß verbesserte Bestimmung der Eigenbewegung des Fahrzeugs 100 ermöglicht. An ein als Bussystem implementiertes Fahrzeugnetzwerk 202 des Fahrzeugs 100 sind die Rückfahrkamera 110, Ultraschallsensoren 112 sowie die ECU 114 angeschlossen (diese Elemente sind bereits in Fig. 1 gezeigt). Desweiteren ist mindestens eine Sensorik 204 an den Bus 202 angeschlossen, wobei die Sensorik 204 beispielsweise folgendes umfassen kann: Einen Radsensor oder mehrere derartiger Sensoren zur umgebungsunabhängigen Bestimmung einer Fahrzeuggeschwindigkeit; einen Lenkungssensor zur Bestimmung eines Lenkwinkels, ein Gyroskop zur Bestimmung einer rotatorischen Bewegung des Fahrzeugs, ein GPS-Sensor, etc.

Die ECU 114 umfasst eine Bewegungsflusskomponente 210 zum Bestimmen von Bewegungsflüssen in Bildsequenzen, eine Eigenbewegungskomponente 212 zum Bestimmen einer Eigenbewegung des Fahrzeugs 100 basierend auf in der Komponente 210 bestimmten Bewegungsflüssen, eine Trajektorienkomponente 214 zur Berechnung, Überprüfung und/oder Anpassung von Trajektorien wie den in Fig. 1 gezeigten Trajektorien 122 - 126, eine Ultraschallkomponente 216 zur Berechnung von Abständen von und Richtungen zu Objekten, die von der Ultraschallsensorik 112 detektiert werden, sowie eine Sensorkomponente 218 zur Verarbeitung von Daten der Sensorik 204.

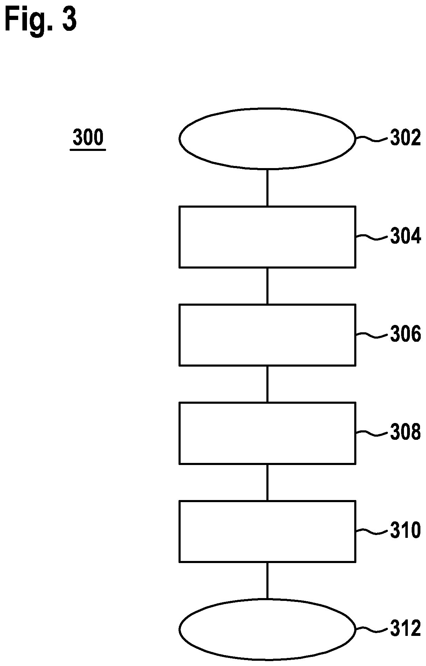

Eine Arbeitsweise der in Fig. 2 gezeigten Komponenten des Fahrerassistenzsystems 102 wird nachfolgend anhand des Flussdiagramms 300 in Fig. 3 genauer erläutert. Wie gesagt, wirken in Fig. 2 gezeigte Komponenten zusammen, um eine Eigenbewegung des Fahrzeugs 100 während des Einparkens in eine Parklücke zu bestimmen (302). In Schritt 304 nimmt die Rückfahrkamera 110 eine Sequenz zeitlich aufeinanderfolgender Bilder einer rückwärtigen Umgebung des Fahrzeugs 100 auf. In der Praxis wird die Rückfahrkamera 110 während des gesamten Einparkvorganges entlang der Trajektorien 122 - 126 aktiv sein und der ECU 114 einen kontinuierlichen Bildstrom liefern. Die Komponente 210 der ECU 114 steuert die Rückfahrkamera 110 in entsprechender Weise an, und speichert die von der Kamera 110 angelieferte Bildsequenz in einem Zwischenspeicher 224 für eine Weiterverarbeitung ab.

Parallel dazu messen auch die Ultraschallsensoren 112 einen rückwärtigen Fahrzeugumgebungsbereich aus und liefern entsprechende Daten über den Bus 202 an die zugeordnete Verarbeitungskomponente 216. Darüberhinaus liefert auch die Sensorik 204 kontinuierlich Momentandaten über bspw. Geschwindigkeit und Lenkwinkel des Fahrzeugs 100 an die zugeordnete Verarbeitungskomponente 208.

In Schritt 306 bestimmt die Verarbeitungskomponente 212 aus einer Bildsequenz, die mehrere zeitlich aufeinanderfolgende Aufnahmen umfasst, die im Speicherbereich 224 gespeichert sind, einen Bewegungsfluss ("Motion Flow") mindestens eines Objektes, das in der rückwärtigen Fahrzeugumgebung identifiziert wird. Zu diesem Zweck kann der Speicherbereich 224 beispielsweise als zyklischer Speicher ausgeführt sein, in dem eine bestimmte Anzahl an Aufnahmen der Rückfahrkamera 110 für eine zurückliegenden Zeitraum zwischengespeichert und entsprechend durch neuere Aufnahmen überschrieben wird. Die Bestimmung eines Bewegungsflusses von Punkten, die ein Objekt identifizieren, aus einer Bildsequenz, bspw. anhand von optischen Flussverfahren, ist dem Fachmann an sich bekannt und wird daher hier nicht weiter diskutiert.

In dem Beispielszenario der Fig. 1 befinden sich insbesondere die Objekte 106 und 108 im Blickfeld der Kamera 110. Somit würde die Verarbeitungskomponente 212 aus den gespeicherten Bildern die Objekte 106 und 108 identifizieren und jeweils deren Bewegungsfluss bestimmen. Weil die die Rückfahrkamera 110 fest (oder zumindest mit momentan bekannter Position und Ausrichtung) am Fahrzeug 100 befestigt ist, berechnet die Komponente 212 die Bewegungsflüsse der Objekte 106 und 108 in einem fahrzeugfesten Koordinatensystem.

Zusätzlich zur Verarbeitung der von der Kamera 110 zugelieferten optischen oder Infrarotdaten in der ECU-Komponente 212 verarbeitet die ECU 114 mit ihrer Komponente 216 von der Ultraschallsensorik 112 zugelieferte Repräsentationen der rückwärtigen Fahrzeugumgebung. Aus den Daten könnten bspw. momentane Abstände und Richtungen zu den Objekten 106, 108 bestimmt werden. Diese Angaben beziehen sich ebenfalls auf ein fahrzeugfestes Koordinatensystem, d.h. basierend auf den Ultraschalldaten könnten unabhängige Werte für eine Bewegung der Objekte 106 und 108 in einem fahrzeugfesten Koordinatensystem bestimmt werden. Die Sensorik 204 ist nicht sensitiv für eine Umgebung des Fahrzeugs 100; die Komponente 218 verarbeitet entsprechende Sensordaten und stellt umgebungsunabhängige Informationen zu einer momentanen Fahrzeugbewegung bereit.

In Schritt 308 nimmt die Berechnungskomponente 214 die Verarbeitungsdaten der Komponenten 212, 216 und 218 entgegen, d.h. konkret kamerabasierte Daten zur scheinbaren Bewegung der Objekte 106 und 108 in Bezug auf das Fahrzeug 100 von der Komponente 212, entsprechende ultraschallbasierte Daten von der Komponente 216 und Daten über die Eigenbewegung des Fahrzeugs 100 anhand von bspw. Radgeschwindigkeit und Lenkwinkel von der Komponente 218. Die Komponente 214 ermittelt anhand der Daten eine Schätzung für die Eigenbewegung ("Ego-Motion") des Fahrzeugs 100. Beispielsweise kann die Komponente 214 eine Datenfusion durchführen, im Zuge dessen eine von der Sensorik 204 umgebungsunabhängig ermittelte Eigenbewegung des Fahrzeugs 100 basierend auf den aus den Kameradaten ermittelten Bewegungsflüssen der Objekte 106, 108 korrigiert wird.

Beispielsweise kann die ermittelte Eigenbewegung im Hinblick auf eine Seitwärtsbewegung der Objekte 106 oder 108 korrigiert werden, die basierend auf den Kameradaten nach Verarbeitung durch ein optisches Flussverfahren sehr genau gemessen werden kann. Somit kann etwa ein leichtes Gieren des Fahrzeugs als Abweichung von einer vorab berechneten Trajektorie herum früh erfasst werden (vgl. die entsprechende beispielhafte Diskussion weiter unten).

Zusätzlich zu den Sensordaten der Sensorik 204 und den Kameradaten der Kamera 110 können auch die Ultraschalldaten der Ultraschallsensorik 112 zur Korrektur bzw. genaueren Bestimmung der Eigenbewegung des Fahrzeugs 100 herangezogen werden. Beispielsweise können Abstände und Richtungen zu den Objekten 106, 108 jeweils sowohl aus den Ultraschalldaten als auch den Kameradaten bestimmt und dann in geeigneter Weise zusammengeführt werden. Aus dem Verlauf der Abstands- und/oder Richtungswerte kann dann eine Korrektur der basierend auf den umgebungsunabhängigen Sensoren und/oder der Kamera ermittelten Eigenbewegung erfolgen, bspw. unter der Annahme ruhender Umgebungsobjekte.

Zusätzlich oder alternativ kann eine Eigenbewegung des Fahrzeugs 100 auch basierend auf der Bestimmung eines Bewegungsflusses der Fahrbahn- bzw. Bodenoberfläche etwa der Parkbucht 104 erfolgen. Wird eine Bodenoberfläche als Basis einer Bewegungsflussberechnung genommen, kann insbesondere davon ausgegangen werden, dass diese statisch ist, d.h. eine Eigenbewegung des Fahrzeugs 100 kann zuverlässig bestimmt werden. Basierend auf den Schätzungen zur Eigenbewegung des Fahrzeugs 100 basierend etwa auf den Daten der Kamera 110 als auch unabhängig davon der Sensorik 204 kann als eine weitere Möglichkeit auch eine Bewegung eines Objekts 106 oder 108 bestimmt werden. Diese würde sich beispielsweise aus einer systematischen Diskrepanz zwischen der erwarteten Position und dem erwarteten Abstand des Objekts, wie er sich aus der Eigenbewegung des Fahrzeugs 100 basierend auf der Sensorik 204 ergibt, gegenüber dem kamerabasiert ermittelten Bewegungsfluss dieses Objekts ergeben.

Die Berechnungskomponente 214 kann quasi-kontinuierlich arbeiten und beispielsweise in regelmäßigen Abständen von 100 Millisekunden die Verarbeitungsdaten der Komponenten 210, 216 und 218 betreffend einen zurückliegenden Zeitraum von 0.1, 0.3, 0.5 oder 1.0 Sekunden heranziehen (insbesondere die auf den für einen entsprechenden Zeitraum zwischengespeicherten Aufnahmen der Kamera 110 basierende ermittelte Eigenbewegung).

In Schritt 310 liefert die Berechnungskomponente 214 den berechneten Wert der (momentanen) Eigenbewegung des Fahrzeugs 100 an eine oder mehrere weitere Komponenten des Fahrerassistenzsystems 102. In Fig. 2 eingezeichnet sind als Beispiele die Trajektorienberechnungskomponente 220 und die Kollosionswarnungskomponente 222. Die Komponente 220 überwacht bspw. u.a. anhand der zur Verfügung gestellten Eigenbewegung, inwieweit das Fahrzeug 100 der vorausberechneten Trajektorie 122 - 126 beim Einparken in die Parklücke 104 tatsächlich folgt. Basierend auf der kamerabasiert ermittelten Eigenbewegung des Fahrzeugs 100 kann die Komponente 220 beispielsweise feststellen, ob ein Gegenlenken erfolgen muss.

Ist die berechnete Einparktrajektorie beispielsweise die in Fig. 1 gestrichelt dargestellte Ideale 138, so würde das Einparken des Fahrzeugs 100 entlang dieser Trajektorie eine bestimmte scheinbare Bewegung der Objekte 106 und 108 im Blickfeld der Rückfahrkamera 110 bedeuten. Insbesondere würden sich die Objekte 106 und 108 in bestimmter Weise seitwärts aus dem Blickfeld der Kamera herausbewegen, wobei bei Annäherung an den Stopppunkt S4 ein Abstand zu jedem der Objekte 106, 108 konstant bleiben würde. Bewegt sich das Fahrzeug aufgrund einer Ungenauigkeit in der Lenkung (Gieren) tatsächlich etwa auf der Trajektorie 132, würde sich das Objekt 108 nicht in der erwarteten Weise aus dem Blickfeld der Rückfahrkamera 110 herausbewegen und/oder der Abstand zu Objekt 108, wie aus einer optischen Flussberechnung in der Komponente 212 berechnet, würde sich verringern, während sich gleichzeitig das Objekt 106 allmählich aus dem Blickfeld der Rückfahrkamera 110 herausbewegt und ein Abstand zunimmt. Aus dieser Schilderung wird deutlich, dass ein Vergleich der vorausberechneten Trajektorie mit der tatsächlichen Trajektorie durch die Berücksichtigung der kamerabasiert ermittelten Bewegungsflüsse der Objekte 106, 108 verbessert werden kann.

Um von der ermittelten bzw. tatsächlichen Trajektorie 132 zurück in die Nähe der idealen Trajektorie 138 zu gelangen, initiiert die Komponente 220 ein entsprechendes Gegenlenken. Somit tritt insgesamt nur eine geringe Abweichung von der idealen vorausberechneten Trajektorie 138 auf.

Für die ermittelte bzw. tatsächliche Trajektorie 132 berechnet außerdem die Komponente 222 basierend auf der verbesserten Eigenbewegungsschätzung sowie den (bspw. kamera- und/oder ultraschallbasiert ermittelten) Abständen zu den potentiellen Hindernissen 106, 108 die Wahrscheinlichkeit einer Kollision und generiert gegebenenfalls entsprechende Kollisionswarnungen, die entweder an den Fahrer ausgegeben oder zu einer automatischen Bremsung führen können.

Der in Fig. 3 gezeigte Ablauf 300 wird bspw. während des Einparkens in die Parklücke 104 zyklisch durchlaufen, so das der Schritt 312 zurück zu Schritt 304 verzweigt.

Während bei dem hier gezeigten Ausführungsbeispiel Ultraschalldaten, Kameradaten und umgebungsunabhängige Sensordaten ausgewertet werden, kann bei einfacheren Systemen eine Fahrzeugeigenbewegung bspw. auch ausschließlich kamerabasiert erfolgen, oder kann ohne Berücksichtigung von Ultraschalldaten nur kamerabasiert und basierend auf umgebungsunabhängigen Daten erfolgen. Während bei dem vorstehend beschriebenen Beispiel eine Fahrzeugbewegung und -position umgebungsunabhängig basierend auf Fahrzeuggeschwindigkeit und Lenkwinkel bestimmt wurde, kann zusätzliche oder andere Sensorik ebenso umgebungsunabhängige Daten liefern, beispielsweise kann ein GPS-Sensor und/oder ein Gyroskop eingesetzt werden.

Wie oben beschrieben kann eine kamerabasierte und/oder ultraschallbasierte, auf einem fahrzeugfesten Koordinatensystem beruhende Umfeldkarte in eine raumfeste Umfeldkarte transformiert werden, in der die Eigenbewegung des Fahrzeugs dargestellt werden kann. Umgekehrt ist es ebenso denkbar, die fahrzeugfeste Umfeldkarte zu belassen und die Daten der umgebungsunabhängigen Sensorik entsprechend zu berücksichtigen.

Aus der Bestimmung von Bewegungsflüssen beispielsweise im Rahmen einer optischen Flussberechnung lassen sich vergleichsweise einfach Kollisionszeiten TTCs ableiten. Diese können unmittelbar aus der Verarbeitung der Kameradaten (oder nach Korrektur einer fahrzeugfesten/raumfesten Umgebungskarte bzw. Eigenbewegung des Fahrzeugs durch zusätzliche Daten einer Ultraschallsensorik oder weiterer Sensordaten) an ein Kollisionswarnsystem ausgegeben werden.

Die Erfindung ist nicht auf die hier beschriebenen Ausführungsbeispiele und die darin hervorgehobenen Aspekte beschränkt; vielmehr sind innerhalb des durch die anhängenden Ansprüche angegebenen Bereichs eine Vielzahl von Abwandlungen möglich, die im Rahmen fachmännischen Handelns liegen.

## Patentansprüche

1. Verfahren in einem Parkassistenzsystem (102) eines Fahrzeugs (100) zur kontinuierlichen Berechnung, Überprüfung und/oder Anpassung einer Parktrajektorie (122-126), bei dem eine Eigenbewegung des Fahrzeugs (100) mit den folgenden Schritten bestimmt wird:
- Aufnehmen (304), durch eine Fahrzeugkamera (1 10), einer Sequenz zeitlich aufeinander folgender Bilder einer Fahrzeugumgebung;
- Bestimmen (306), basierend auf der Bildsequenz, mindestens eines Bewegungsflusses bezüglich eines Objekts (106, 108) in der Fahrzeugumgebung; und
- Bestimmen (308) der Eigenbewegung des Fahrzeugs basierend auf dem mindestens einen Bewegungsfluss,
- wobei zur Bestimmung der Eigenbewegung des Fahrzeugs (100) weiterhin Daten von Fahrzeugsensoren (204) herangezogen werden, die eine momentane Geschwindigkeit und/oder einen momentanen Lenkwinkel messen, und wobei eine Datenfusion durchführt wird, im Zuge dessen eine von den Fahrzeugsensoren (204) umgebungsunabhängig ermittelte Eigenbewegung des Fahrzeugs (100) basierend auf den aus den Kameradaten ermittelten Bewegungsflüssen der Objekte (106, 108) korrigiert wird; und
- Berechnung einer Parktrajektorie (122 -126) in Abhängigkeit der bestimmten Eigenbewegung des Fahrzeugs (100).

2. Verfahren nach Anspruch 1,
wobei die Fahrzeugkamera eine Rückfahrkamera (1 10) ist, die Bilder einer rückwärtigen Fahrzeugumgebung aufnimmt.

3. Verfahren nach einem der vorhergehenden Ansprüche,
wobei zur Bestimmung der Eigenbewegung des Fahrzeugs (100) weiterhin Daten von
Ultraschallsensoren (1 12) des Fahrzeugs (110) herangezogen werden, die Abstände zu Objekten (106, 108) in der Fahrzeugumgebung messen.

4. Verfahren nach einem der vorhergehenden Ansprüche,
wobei aus dem mindestens einen Bewegungsfluss eine Time-to-Collision berechnet wird, die in die Bestimmung der Eigenbewegung und/oder eine Bestimmung einer Kollisionswarnung eingeht.

5. Verfahren nach einem der vorhergehenden Ansprüche,
wobei basierend auf dem mindestens einen bestimmten Bewegungsfluss und mindestens einem weiteren bestimmten Bewegungsfluss und/oder weiteren Sensordaten eine
Eigenbewegung eines Objekts in der Fahrzeugumgebung detektiert wird.

6. Verfahren zur Kollisionswarnung in einem Fahrerassistenzsystem (102) eines Fahrzeugs (100), bei dem eine Eigenbewegung des Fahrzeugs (100) gemäß einem der Ansprüche 1 bis 6 bestimmt wird.

7. Computerprogramm zur Durchführung des Verfahrens nach einem der vorhergehenden Ansprüche, wenn das Computerprogramm auf einer programmierbaren Computereinrichtung ausgeführt wird.

8. Fahrerassistenzsystem (102) ausgebildet zur Bestimmung einer Eigenbewegung eines Fahrzeugs (100), mit den folgenden Komponenten:
- eine Fahrzeugkamera (110) zum Aufnehmen einer Sequenz zeitlich aufeinander folgender Bilder einer Fahrzeugumgebung;
- eine Bewegungsflusskomponente (210) zum Bestimmen, basierend auf der Bildsequenz, mindestens eines Bewegungsflusses bezüglich eines Objekts (106, 108) in der Fahrzeugumgebung; und
- eine Komponente (214) zum Bestimmen der Eigenbewegung des Fahrzeugs basierend auf dem mindestens einen optischen Fluss und zum Durchführen einer Datenfusion, bei der eine von einer Sensor (204) umgebungsunabhängig ermittelte Eigenbewegung des Fahrzeugs (100) basierend auf den aus den Kameradaten ermittelten Bewegungsflüssen der Objekte (106, 108) korrigiert wird, und zur Ermittlung einer Parktrajektorie in Abhängigkeit der bestimmten Eigenbewegung.

## Claims

1. Method in a parking assistance system (102) of a vehicle (100) for continuously calculating, checking and/or adapting a parking trajectory (122-126), in which a movement of the vehicle (100) is determined with the following steps:
- capturing (304), by means of a vehicle camera (110), a sequence of chronologically successive images of the surroundings of the vehicle;
- determining (306), on the basis of the image sequence, at least one movement flow with respect to an object (106, 108) in the surroundings of the vehicle; and
- determining (308) the movement of the vehicle on the basis of the at least one movement flow,
- wherein in order to determine the movement of the vehicle (100), data is also used from vehicle sensors (204) which measure an instantaneous speed and/or an instantaneous steering angle, and wherein a data fusion is carried out, in the course of which a movement of the vehicle (100) which is determined independently of the surroundings by the vehicle sensors (204) is corrected on the basis of the movement flows of the objects (106, 108) which are determined from the camera data; and
- calculating a parking trajectory (122-126) as a function of the determined movement of the vehicle (100).

2. Method according to Claim 1,
wherein the vehicle camera is a rearview camera (110) which captures images of the surroundings to the rear of the vehicle.

3. Method according to one of the preceding claims,
wherein data from ultrasonic sensors (112) of the vehicle (110) which sensors measure distances from objects (106, 108) in the surroundings of the vehicle are also used to determine the movement of the vehicle (100).

4. 1 Method according to one of the preceding claims,
wherein a time-to-collision, which is included in the determination of the movement and/or a determination of a collision warning is calculated from the at least one movement flow.

5. Method according to one of the preceding claims,
wherein a movement of an object in the surroundings of the vehicle is detected on the basis of the at least one determined movement flow and the at least further determined movement flow and/or further sensor data.

6. Method for warning of a collision in a driver assistance system (102) of a vehicle (100), in which a movement of the vehicle (100) is determined according to one of Claims 1 to 6.

7. Computer program for carrying out the method according to one of the preceding claims when the computer program is run on a programmable computer device.

8. Driver assistance system (102) designed to determine a movement of a vehicle (100), having the following components:
- a vehicle camera (110) for capturing a sequence of chronologically successive images of the surroundings of the vehicle;
- a movement flow component (202) for determining, on the basis of the image sequence, at least one movement flow with respect to an object (106, 108) in the surroundings of the vehicle; and
- a component (214) for determining the movement of the vehicle on the basis of the at least one visual flow, and for carrying out a data fusion in which a movement of the vehicle (100) which is determined independently of the surroundings by a sensor (204) is collected on the basis of the movement flows of the objects (106, 108) which are acquired from the camera data, and for acquiring a parking trajectory as a function of the determined movement of the vehicle.

## Revendications

1. Procédé dans un système d'assistance au stationnement (102) d'un véhicule (100) destiné à calculer, contrôler et/ou adapter continuellement une trajectoire de stationnement (122-126), selon lequel un mouvement propre du véhicule (100) est déterminé avec les.étapes suivantes :
- enregistrement (304), par une caméra de véhicule (110), d'une séquence d'images chronologiquement successives d'un environnement de véhicule ;
- détermination (306), en se basant sur la séquence d'images, d'au moins un flux de mouvement par rapport à un objet (106, 108) dans l'environnement de véhicule ; et
- détermination (308) du mouvement propre du véhicule en se basant sur l'au moins un flux de mouvement,
- la détermination du mouvement propre du véhicule (100) faisant en plus appel à des données de capteurs de véhicule (204) qui mesurent une vitesse momentanée et/ou un angle de direction momentané, et une fusion de données étant effectuée, à la suite de laquelle un mouvement propre du véhicule (100) déterminé indépendamment de l'environnement par les capteurs de véhicule (204) est corrigé en se basant sur les flux de mouvement des objets (106, 108) déterminés à partir des données de caméra ; et
- calcul d'une trajectoire de stationnement (122 - 126) en fonction du mouvement propre déterminé du véhicule (100).

2. Procédé selon la revendication 1, la caméra de véhicule étant une caméra de marche arrière (110) qui enregistre les images d'un environnement arrière du véhicule.

3. Procédé selon l'une des revendications précédentes, la détermination du mouvement propre du véhicule (100) faisant en plus appel à des données de capteurs à ultrasons (112) du véhicule (110), lesquels mesurent les écarts par rapport aux objets (106, 108) dans l'environnement du véhicule.

4. Procédé selon l'une des revendications précédentes, une durée avant collision étant calculée à partir de l'au moins un flux de mouvement, laquelle intervient dans la détermination du mouvement propre et/ou une détermination d'une alerte de collision.

5. Procédé selon l'une des revendications précédentes, un mouvement propre d'un objet dans l'environnement du véhicule étant détecté en se basant sur l'au moins un flux de mouvement déterminé et au moins un flux de mouvement déterminé supplémentaire et/ou des données de capteur supplémentaires.

6. Procédé d'alerte de collision dans un système d'assistance au stationnement (102) d'un véhicule (100), selon lequel un mouvement propre du véhicule (100) est déterminé selon l'une des revendications 1 à 6.

7. Programme informatique destiné à mettre en oeuvre le procédé selon l'une des revendications précédentes lorsque le programme informatique est exécuté sur un dispositif informatique programmable.

8. Système d'assistance au stationnement (102) conçu pour déterminer un mouvement propre d'un véhicule (100), comprenant les composants suivants :
- une caméra de véhicule (110) destinée à enregistrer une séquence d'images chronologiquement successives d'un environnement de véhicule ;
- un composant de flux de déplacement (210) destiné à déterminer, en se basant sur la séquence d'images, au moins un flux de mouvement par rapport à un objet (106, 108) dans l'environnement de véhicule ; et
- un composant (214) destiné à déterminer le mouvement propre du véhicule en se basant sur l'au moins un flux optique et à effectuer une fusion de données, lors de laquelle un mouvement propre du véhicule (100) déterminé par un capteur (204) indépendamment de l'environnement est corrigé en se basant sur les flux de mouvement des objets (106, 108) déterminés à partir des données de caméra, et à déterminer une trajectoire de stationnement en fonction du mouvement propre déterminé.
